# EUROPÄISCHE PATENTANMELDUNG

(11) **EP 3 627 024 A1**
(43) Veröffentlichungstag der Anmeldung: **25.03.2020**
(21) Anmeldenummer: 19198352.7
(22) Anmeldetag: 19.09.2019
(51) Int. Cl.: F16L 3/10, F16L 3/24, F16B 21/02, H02G 3/30, H02G 3/32, F16L 1/024

(54) **EINLEGEROHRSCHELLE MIT ROHRSCHELLENBÜGEL UND KLAMMER**

(30) Priorität: 20.09.2018 EP 18195607
(71) Anmelder: Renner AG, 8854 Siebnen (CH)
(72) Erfinder: GÖKTAS, Dogan, 8864 Reichenburg (CH)
(74) Vertreter: Koelliker, Robert

(57) **Zusammenfassung**

Die vorliegende Erfindung bezieht sich auf eine Einlegerohrschelle (1) umfassend mindestens einen Rohrschellenbügel (2) mit seitlichen Klammern (3) und Stützen (4) mit einer Vielzahl seitlicher Öffnungen (41), wobei
- die Endbereiche (21, 22) der Rohrschellenbügel (2) mindestens je ein Fixierelement A (24, 27) und die Klammern (3) mindestens eine Zunge (34) und mindestens ein Fixierelement B (31, 35) aufweisen, wobei das Fixierelement A (24, 27) und das Fixierelement B (31, 35) ineinandergreifen, wodurch die Klammer (3) am Endbereich (21, 22) des Rohrschellenbügels (2), fixiert wird,
- die Klammer (3), wenn sie in mindestens eine Öffnung (41) der Stütze (4) greifen um den Rohrschellenbügel (2) an der Stütze (4) zu befestigen, die Stütze (4) nicht umfasst, und
- die Zunge (34) der Klammer (3), wenn die Klammer an den Endbereichen (21, 22) des Rohrschellenbügels (2) angebracht ist, parallel zu den Endbereichen (21, 22) des Rohrschellenbügels (2) angeordnet ist.

Beansprucht wird zudem ein Verfahren mit der erfindungsgemässen Einlegerohrschelle (1) zum Verlegen von Rohren (7) mit der Einlegerohrschelle (1) sowie die Verwendung der erfindungsgemässen Einlegerohrschelle (1) zum Fixieren von Rohren (7).

## Beschreibung

Die vorliegende Erfindung bezieht sich auf eine Einlegerohrschelle, ein Verfahren zum Verlegen von Rohren mit der Einlegerohrschelle sowie die Verwendung der Einlegerohrschelle.

Beim Verlegen von Rohren werden diese in regelmässigen Abständen fixiert, damit sie nicht plötzlich lose herumliegen oder herunterhängen. Die Fixierung erfolgt oft über sogenannte Einlegerohrschellen, welche einerseits am Untergrund befestigt werden und andererseits eine Vorrichtung aufweisen, an welcher die Rohre angebracht werden.

So beschreibt die EP 2 910 829 A1 ein Rohrschellenelement für eine Rohrhalterung mit Stützen, welche durch das Rohrschellenelement verbindbar sind, wobei das Rohrschellenelement einen Träger aufweist, wobei dieser mit einem Befestigungselement, d.h. einer Klammer, ausgerüstet ist, welches die Stütze umfasst und in Längsrichtung L des Trägers verschiebbar ist, dass mindestens eine Zunge des Befestigungselements in einer Anfangsstellung der Verschiebbarkeit des Befestigungsteils die Ausnehmung im Träger im Wesentlichen frei lässt und in einer dazu verschobenen Endstellung die Ausnehmung im Träger mindestens teilweise überdeckt. Dabei erfolgt die Fixierung der Klammer am Rohrschellenelement zwischen den beiden Stützen. Dadurch kann eine schnelle Befestigung der Klammern erhalten werden. Nachdem die Stütze in das Rohrschellenelement mit der Klammer eingefügt sind, kann die Klammer nicht mehr ohne eine vollständige Demontage des Rohrschellenelements von der Stütze entfernt werden. Dies wäre jedoch insbesondere bei einer - beispielsweis irrtümlichen - Beschädigung der Klammer äusserst hilfreich.

Die CH 700 182 B1 beschreibt eine Rohrhalterung mit von einem Grundelement wegragenden Stützen und mindestens einem an beiden Stützen befestigbaren Rohrschellenteil. Dieses wird mit einer Klammer an den Stützen, welche eine Vielzahl an Öffnungen aufweisen, befestigt. Dabei weisen die Klammern einen runden Halteteil auf und einen in vertikaler Richtung eckigen Fixierteil, welcher durch Öffnungen der Stützen gestossen wird. Die Fixierung der Klammer erfolgt primär durch die eckige Form des Fixierteils. Nachdem die Klammer durch die Öffnungen der Stützen gestossen wurde, weist der Fixierteil im Bereich der Öffnungen die grösste Ausdehnung auf. Nachteilig daran ist, dass die Klammer - wenn überhaupt - nach dem Befestigen an der Stütze nur mit grossem Kraftaufwand wieder entfernt werden kann.

Die Aufgabe der vorliegenden Erfindung ist es daher die Nachteile des Standes der Technik zu beheben. Dabei soll es insbesondere möglich sein, dass die Klammern einfach und ohne grossen Kraftaufwand an den Rohrschellenbügel angebracht und in den Stützen eingerastet werden können. Insbesondere soll es möglich sein, die Klammern vom Rohrschellenbügel auf einfache Art und Weise zu lösen, auch nachdem die Stütze in den Rohrschellenbügel eingefügt wurde.

Die Aufgabe konnte überraschenderweise gelöst werden mit einer Einlegerohrschelle (1) umfassend mindestens einen Rohrschellenbügel (2) mit seitlichen Klammern (3) und Stützen (4) mit einer Vielzahl seitlicher Öffnungen (41), wobei der Rohrschellenbügel (2) einen linken und einen rechten Endbereich (21, 22) mit je einer Öffnung (23) aufweist, wobei die Stützen (4) in die Öffnungen (23) eingeführt werden können und die Klammern (3) so über die Endbereiche (21, 22) geschoben werden können, dass die Klammern (3) in mindestens eine Öffnung (41) der Stütze (4) greifen um den Rohrschellenbügel (2) an der Stütze (4) zu befestigen, wobei
- die Endbereiche (21, 22) mindestens ein Fixierelement A (24, 27) und die Klammern (3) mindestens eine Zunge (34) und mindestens ein Fixierelement B (31, 35) aufweisen, wobei das Fixierelement A (24, 27) und das Fixierelement B (31, 35) ineinandergreifen, wodurch die Klammer (3) am Endbereich (21, 22) des Rohrschellenbügels (2), und somit an der gegenüberliegenden Seite des relativ zum zwischen den Öffnungen (23) befindlichen Mittelteils des Rohrschellenbügels (2), fixiert wird,
- die Klammer (3), wenn sie in mindestens eine Öffnung (41) der Stütze (4) greifen um den Rohrschellenbügel (2) an der Stütze (4) zu befestigen, die Stütze (4) nicht umfasst, und
- die Zunge (34) der Klammer (3), wenn die Klammer an den Endbereichen (21, 22) des Rohrschellenbügels (2) angebracht ist, parallel zu den Endbereichen (21, 22) des Rohrschellenbügels (2) angeordnet ist.

Beansprucht wird auch ein Verfahren zum Verlegen von Rohren (7) mit der erfindungsgemässen Einlegerohrschelle (1), wobei
i) die Klammern (3) in die Endbereiche (21, 22) eines ersten Rohrschellenbügels (2) geschoben werden, wodurch mindestens ein Fixierelement A (24, 27) des Rohrschellenbügels (2) und mindestens ein Fixierelement B (31, 35) der Klammer (3) ineinandergreifen, und so die Klammer (3) am Rohrschellenbügel (2) gehalten wird,
ii) die Stützen (4) durch die Öffnungen (23) des ersten Rohrschellenbügels (2) geführt werden und der Rohrschellenbügel (2) mittels den Klammern (3) an gewünschter Stelle an den Stützen (4) befestigt wird, indem die Zungen (34) der Klammern (3) durch die Öffnungen (41) gestossen werden,
iii) gegebenenfalls mittels Biegen und/oder Drehen des Verschlusses (25) mindestens eine Klammer (3) fixiert wird,
iv) ein Rohr (7) auf den Rohrschellenbügel (2) gelegt wird, und
v) gegebenenfalls die Schritte i) bis iii) mit einem zweiten Rohrschellenbügel (2) wiederholt werden, wodurch das Rohr (7) oben und unten mit je einem Rohrschellenbügel (2) gehalten wird.

Auch wird die Verwendung der erfindungsgemässen Einlegerohrschelle (1) beansprucht zum Fixieren von Rohren (7) wie Wasserrohre Lüftungsrohre, Kabelrohre sowie Kabel und/oder Leitungen wie Stromleitungen, Telefonleitungen und/oder TV-Leitungen.

Die erfindungsgemässe Einlegerohrschelle (1), das erfindungsgemässe Verfahren zum Verlegen von Rohren (7) mit der erfindungsgemässen Einlegerohrschelle (1) sowie die erfindungsgemässe Verwendung der Einlegerohrschelle (1) weisen überraschenderweise viele Vorteile auf. So lassen sich die Klammern (3) auf einfache Art und Weise werk- und/oder bauseitig über die Endbereiche (21, 22) der Rohrschellenbügel (2) schieben und in den Stützen (4) einrasten. Dies erlaubt bei bauseitiger Montage - und bei entsprechendem Angebot - eine flexible Auswahl der Klammern (3), d.h. die Klammer (3) kann individuell nach den spezifischen Anforderungen und/oder Bedürfnissen ausgewählt werden. Die Klammern (3) können zudem auch ohne grossen Kraftaufwand wieder aus der Stütze (4) gezogen werden, falls die Höhe der Rohrschellenbügel (2) angepasst werden sollte. Dabei ist es von grossem Vorteil, dass die Klammer (3) einfach und ohne grossen Kraftaufwand, beispielsweise mit Hilfe eines Schraubenziehers und einer Drehbewegung, vom Rohrschellenbügel (2) entfernt - und beispielsweise ersetzt - werden kann, auch nachdem die Stütze (4) in den Rohrschellenbügel (2) eingeführt wurde. Nachdem die vertikale Positionierung des Rohrschellenbügels (2) abgeschlossen ist, kann die Klammer (3) beispielsweise mittels Verschluss (25) zusätzlich fixiert werden, sodass die Klammer (3) nicht mehr aus den seitlichen Öffnungen (41) der Stütze (4) springt. Zudem lassen sich die Rohrschellenbügel (2), Klammern (3), Stützen (4) und die Bodenplatte (5) auf einfache Art und Weise herstellen. So ist es gemäss vorliegender Erfindung auch möglich, die Klammern (3) symmetrisch herzustellen, was sowohl die Herstellung als auch die Verwendung der Klammern (3) zusätzlich erleichtert.

### Die Einlegerohrschelle (1)

Die erfindungsgemässe Einlegerohrschelle (1) umfasst mindestens einen Rohrschellenbügel (2) mit seitlichen Klammern (3) sowie Stützen (4) mit einer Vielzahl seitlicher Öffnungen (41).

Der Rohrschellenbügel (2), die Klammern (3), die Stützen (4), und gegebenenfalls die Bodenplatte (5) und/oder der Drehverschluss (6) der Einlegerohrschelle (1) basieren typischerweise aus Metall und/oder Kunststoff, insbesondere auf verzinktem Blech, Stahl, Edelstahl, Eisen, Messing, Kupfer, Aluminium und/oder Hartkunststoff. Dabei können die einzelnen Bestandteile alle aus gleichem Material oder aus unterschiedlichen Materialien gefertigt werden.

Die Herstellung der einzelnen Komponenten der Einlegerohrschelle (1) erfolgt mit bekannten Verfahren der Metallverarbeitung, beispielsweise mittels Stanzen und/oder Lasern. Geeignete Verfahren sind dem Fachmann bekannt.

Erfindungswesentlich für die Einlegerohrschelle (1) ist, dass
- die Endbereiche (21, 22) der Rohrschellenbügel (2) mindestens ein Fixierelement A (24, 27) und die Klammern (3) mindestens eine Zunge (34) und mindestens ein Fixierelement B (31, 35) aufweisen, wobei das Fixierelement A (24, 27) und das Fixierelement B (31, 35) ineinandergreifen, wodurch die Klammer (3) am Endbereich (21, 22) des Rohrschellenbügels (2), und somit an der gegenüberliegenden Seite des relativ zum zwischen den Öffnungen (23) befindlichen Mittelteils des Rohrschellenbügels (2), fixiert wird,
- die Klammer (3), wenn sie in mindestens eine Öffnung (41) der Stütze (4) greifen um den Rohrschellenbügel (2) an der Stütze (4) zu befestigen, die Stütze (4) nicht umfasst, und
- die Zunge (34) der Klammer (3), wenn die Klammer an den Endbereichen (21, 22) des Rohrschellenbügels (2) angebracht ist, im Wesentlichen parallel zu den Endbereichen (21, 22) des Rohrschellenbügels (2) angeordnet ist.

Durch diese erfindungsgemässe Ausführung lassen sich die Klammern (3) auf einfache Art und Weise über die Endbereiche (21, 22) der Rohrschellenbügel (2) stossen, wobei die Klammern (3) durch die Fixierelemente A und B reversibel am Rohrschellenbügel (2) befestigt werden. Dies kann beispielsweise werkseitig erfolgen, wodurch auf der Baustelle direkt Rohrschellenbügel (2) mit seitlich angeordneten Klammern (3) einsetzt werden können. Bei der Montage der Einlegerohrschelle können dann die - vorteilhafterweise am Untergrund befestigten - Stützen (4) durch die Öffnungen (23) des Rohrschellenbügels (2) eingeführt und die Klammern (3) in die mindestens eine Öffnung (41) der seitlichen Stütze (4) eingeschoben werden. Bei Bedarf können die Klammern (3) der bei der erfindungsgemässen Einlegerohrschelle (1) auch problemlos und reversibel aus den Öffnungen (41) der Stützen (4) entfernt werden, um die Einstellhöhe des Rohrschellenbügels anzupassen, wobei die Klammern (3) aufgrund der Fixierelemente A (24, 27) und B (31, 35) im Endbereich (21, 22) des Rohrschellenbügels (2) arretiert werden. Da die dadurch erhaltene Fixierung jedoch reversibel ist, können die Klammern (3) auch ganz vom Rohrschellenbügel (2) entfernt werden. Dies ist insbesondere dann von grossem Vorteil, wenn eine - beispielsweise defekte - Klammer (3) entfernt werden muss.

Der Rohrschellenbügel (2) umfasst einen linken und - typischerweise baugleichen - Endbereich (21, 22) mit je einer Öffnung (23), sowie einen Mittelteil, welcher zwischen den beiden Stützen (4) - und somit zwischen den beiden Öffnungen (23) - zu liegen kommt. Der Mittelteil weist bevorzugt eine Profilierung auf, beispielsweise in Form einer V- oder U-Form. Dabei können die Stützen (4) in die Öffnungen (23) der Rohrschellenbügel (2) eingeführt und die Klammern (3) über die Endbereiche (21, 22) geschoben werden, dass die Klammern (3) in mindestens eine Öffnung (41) der Stütze (4) greifen, um den Rohrschellenbügel (2) an der Stütze (4) zu befestigen.

Die Endbereiche (21, 22) des Rohrschellenbügels (2) umfassen den Bereich der Öffnungen (23) zur Aufnahme der Stützen (4), sowie derjenige Teil des Rohrschellenbügels (2), welcher auf der gegenüberliegenden Seite des relativ zum zwischen den Öffnungen (23) befindlichen Mittelteils des Rohrschellenbügels (2) angeordnet ist.

Die Klammer (3) wird an den Endbereichen (21, 22) des Rohrschellenbügels (2) angebracht und dient zur Befestigung des Rohrschellenbügels (2) an den Stütze (4). Die Klammer (3) umfasst einen Haltebereich (32), mindestens eine obere und/oder untere Zunge (34), sowie mindestens ein Fixierelement B (31, 35), wobei das Fixierelement B (31, 35) der Klammer (3) und das mindestens eine Fixierelement A (24, 27) des Rohrschellenbügels (2) ineinandergreifen. Zudem umfasst die Klammer (3) auf der den Zungen (34) abgewandten Seite bevorzugt eine weitere Öffnung (33) im Haltebereichs (32) der Klammer (3) zur Aufnahme eines an der Stirnseite der Endbereiche (21, 22) des Rohrschellenbügels (2) angeordneten Verschlusses (25) zum Befestigen, d.h. Arretieren, der Klammer (3) an der Stütze (4).

Die Stützen (4) mit einer Vielzahl vertikal angeordneten seitlichen Öffnungen (41) dienen zur Fixierung von einem oder mehreren Rohrschellenbügel (2) und somit auch von einem oder mehreren Rohren (7) in der Einlegerohrschelle (1). Durch Auswahl der Öffnungen (41), in welchen die Rohrschellenbügel (2) mittels Klammer (3) fixiert werden, wird die vertikale Höhe der Rohrschellenbügel (2) bestimmt.

Unter dem Begriff Fixierelement A (24, 27) wird verstanden, dass der Rohrschellenbügel (2) ein Fixierelement A (24) und/oder mindestens ein Fixierelement A (27) umfasst, wobei das Fixierelement A (24) und das Fixierelement A (27) sich voneinander unterscheiden, jedoch beide die gleiche Funktion ausüben können.

Unter dem Begriff Fixierelement B (31, 35) wird verstanden, dass die Klammer (3) ein Fixierelement B (31) und/oder mindestens ein Fixierelement B (35) umfasst, wobei das Fixierelement B (31) und das Fixierelement B (35) sich voneinander unterscheiden, jedoch die gleiche Funktion ausüben können.

Die Endbereiche (21, 22) der Rohrschellenbügel (2) weisen je mindestens ein Fixierelement A (24, 27) und die Klammern (3) weisen mindestens ein Fixierelement B (31, 35) auf, d.h. mindestens ein Fixierelement A (24) und ein Fixierelement B (31) oder mindestens ein Fixierelement A (27) und ein Fixierelement B (35), wobei die Fixierelemente (24, 31) respektive die Fixierelemente (27, 35) ineinander greifen. Dadurch wird die Klammer (3) am Endbereich (21, 22) des Rohrschellenbügels (2), und somit an demjenigen Teil des Rohrschellenbügels (2) befestigt, welcher auf der gegenüberliegenden Seite des relativ zum zwischen den Öffnungen (23), und somit zu den Stützen (4), befindlichen Mittelteils des Rohrschellenbügels (2) angeordnet ist.

Vorteilhafterweise ist mindestens ein Fixierelement A (24, 27) als Ausbuchtung und mindesten ein Fixierelement B (31, 35) als Öffnung oder Einbuchtung, oder mindestens ein Fixierelement A (24, 27) als Öffnung oder Einbuchtung und mindesten ein Fixierelement B (31, 35) als Ausbuchtung ausgebildet, wodurch die Ausbuchtung eines Fixierelements in die Öffnung oder Einbuchtung des anderen Fixierelements greift. Durch geeignete Ausgestaltung sind die Fixierelemente typischerweise so ausgestaltet, dass die Klammer (3) so am Endbereich (21, 22) befestigt ist, dass sie mit wenig Kraftaufwand verschoben werden kann.

Das Fixierelement A (24) des Rohrschellenbügels (2) stellt vorteilhafterweise eine Ausbuchtung in den Endbereichen (21, 22) und das Fixierelement B (31) der Klammer (3) eine Öffnung oder Einbuchtung dar, wobei das Fixierelement A (24) so ausgebildet ist, dass der höchste Punkt (24a) der Ausbuchtung in Richtung
i) des Endbereich-Endes (21a, 22a) eine negative Steigung von 5° bis 50°, insbesondere von 10° bis 40°, und/oder
ii) der Mitte des Rohrschellenbügels (2) eine negative Steigung von 55° bis 90°, insbesondere von 70° bis 90°, aufweist.
Dabei wird der höchsten Punkt (24a) der Ausbuchtung so ermittelt, dass der Rohrschellenbügel (2) auf einen horizontalen Untergrund gelegt wird, wobei sich die Ausbuchtung auf der zum Untergrund entgegengesetzten Seite des Rohrschellenbügels (2) befindet. Diese Anordnung erlaubt, dass die Klammer (3) ohne grossen Kraftaufwand entlang den Endbereichen (21, 22) und weiter Richtung Stütze (4) gestossen kann, um die Zunge oder Zungen (34) in die Öffnung oder Öffnungen (41) einzuschieben. Dadurch wird der Rohrschellenbügel (2) an der Stütze (4) in gewünschter Position fixiert. Wird nun die Klammer (3) wieder aus der Öffnung (41) zurückgezogen, dient die Ausbuchtung, d.h. das Fixierelement A (24), als Anschlag des Fixierelements B (31) der Klammer (3), wodurch die Klammer (3) unbeabsichtigt nicht oder nur mit sehr grossem Kraftaufwand vom Rohrschellenbügel (2) entfernt werden kann.

Das Fixierelement A (24) stellt zudem bevorzugt eine Ausbuchtung und das Fixierelement B (31) eine längliche Öffnung dar, wodurch, wenn das Fixierelement A (24) und das Fixierelement B (31) ineinander greifen, die Klammer (3) in Längsrichtung des Rohrschellenbügels (2) frei hin und zurück geschoben werden kann, solange die Fixierelemente A, B (24, 31) ineinandergreifen.

Der Rohrschellenbügel (2) kann - anstelle oder zusätzlich zum Fixierelement A (24) - mindestens ein Fixierelement A (27) umfassen. Dabei ist das Fixierelement A (27) bevorzugt in Form einer Ausbuchtung, Öffnung oder Einbuchtung ausgebildet, wobei bevorzugt die Klammer (3) mindestens ein Fixierelement B (35) in Form einer Öffnung, Einbuchtung oder Ausbuchtung umfasst, wobei das Fixierelement A (27) und das Fixierelement B (35) ineinandergreifen.

Bevorzugt weist mindestens ein Endbereich-Ende (21a, 22a) des Rohrschellenbügels (2) einen bieg- und/oder drehbaren Verschluss (25) und mindestens eine Klammer (3) in der Mitte des Haltebereichs (32) der Klammer (3) eine weitere Öffnung (33) auf, durch welche der Verschluss (25) beim Befestigen der Klammer (3) an der Stütze (4) hindurch führt. Dabei ist der Verschluss (25) vorteilhafterweise am Rohrschellenbügel (2) befestigt oder Teil des Rohrschellenbügels (2). Werden nun Zungen (34) der Klammer (3) in Öffnungen (41) der Stützen (4) geschoben, wird der Verschluss (25) durch die Öffnung (33) der Klammer (3) gestossen. Anschliessend kann der Verschluss (25) gedreht oder abgewinkelt werden, wodurch er die Öffnung (33) verschliesst. Dadurch wird die Klammer (3) am Rohrschellenbügel (2) arretiert.

Der Verschluss (25) weist vorteilhafterweise ein schmales Verbindungsstück zum Endbereich-Ende (21a, 22a) des Rohrschellenbügels (2) auf. Dadurch lässt sich der Verschluss (25) von Hand und/oder mit einem geeigneten Werkzeug ohne grossen Kraftaufwand biegen.

Der Verschluss (25) kann beispielsweise eine T-Form, Ω-Form oder eine einfache Rechteck-Form aufweisen und in der Mitte oder an einer oder beiden Seiten des Endbereich-Endes (21a, 22a) angeordnet sein. Ist der Verschluss (25) an den Seiten der Endbereich-Ende (21a, 22a) angeordnet, stellen die Öffnungen (33) der Klammer (3) vorteilhafterweise seitliche Aussparungen dar, durch welche der Verschluss (25) greifen kann.

In einer bevorzugten Ausführungsform weist mindestens ein Endbereich-Ende (21a, 22a) des Rohrschellenbügels (2) zwei seitliche Führungselemente (26) auf, welche mindestens einen Teil der Klammer (3) seitlich führen. Dadurch wird die Klammer (3) seitlich begrenzt und geführt. Dies verhindert ein seitliches Abrutschen der Klammer (3).

### Die Bodenplatte (5) und Stützen (4) mit Drehverschluss (6)

Die Stützen (4) der erfindungsgemässen Einlegerohrschelle (1) können auf herkömmliche Art und Weise mit dem Untergrund verbunden werden. So können sie am unteren Ende einen Spitz aufweisen, wodurch sie in den Untergrund, beispielsweise Holz, gestossen oder gehämmert werden können. Sie können auch eine Vorrichtung - zum Beispiel ein Fuss mit einer Öffnung - besitzen, anhand welcher die Stütze (4) mit einem Nagel oder einer Schraube am Untergrund befestigt werden kann.

Oft ist es jedoch vorteilhaft, wenn die Stützen an einer Bodenplatte an einem an der Bodenplatte definierten Ort fixiert werden, wobei die Bodenplatte dann am Untergrund befestigt werden kann. Dieses Vorgehen gibt den Abstand der beiden Stützen vor, welcher typischerweise auf die Länge der Rohrschellenbügel abgestimmt wird.

In einer bevorzugten Ausführungsform umfasst die erfindungsgemässe Einlegerohrschelle (1) eine Bodenplatte (5), wobei die Stützen (4) im unteren Endbereich der Stützen (4) einen dazu im Wesentlichen rechtwinklig angeordneten Fuss (42) aufweisen, und die Bodenplatte (5) und der Fuss (42) der Stützen (4) zur Befestigung der Stützen (4) an der Bodenplatte (5) zusammen einen Drehverschluss (6) ausbilden. Dabei ist der Fuss (42) - wenn in den Stützen ein Rohrschellenbügel (2) eingeführt ist - vorteilhafterweise parallel zur Bodenplatte angeordnet.

Der Drehverschluss (6) ist vorteilhafterweise durch eine Öse mit Kragen (51, 44) und eine Öffnung (43, 52) ausgebildet, wobei die Öse (51, 44) in die Öffnung (43, 52) greift, wobei
i) die Öse (51) Teil der Bodenplatte (5) ist, und die Öffnung (43) eine Öffnung im Fuss (42) der Stütze (4) darstellt, oder
ii) die Öffnung (52) eine Öffnung in der Bodenplatte (5) darstellt, und die Öse (44) eine Öse im Fuss (42) der Stütze (4) darstellt.
Durch diese Anordnung werden die Stützen (4) exakt am dafür vorgesehenen Ort der Bodenplatte (5) platziert, wodurch der Abstand der Stützen zueinander optimal auf den Rohrschellenbügel (2) abgestimmt wird. Zudem erlaubt die Öse mit Kragen (51, 44), welche in die Öffnung (43, 52) greift, ein problemloses Drehen an Ort.

Der Drehverschluss (6) umfasst vorteilhafterweise mindestens einen gerundeten Führungsbereich (53), wobei der Führungsbereich (53) Teil der Bodenplatte (5) ist und der Winkelumfang des oder der Führungsbereiche (53) einen Winkel von 180° nicht übersteigt. Werden mehrere Führungsbereiche (53) eingesetzt, gilt der genannte Winkel für die Summe der Führungsbereiche (53). Zudem umfasst der Fuss (42) der Stütze (4) mindestens einen gerundeten Abschnitt (45), wobei der gerundete Abschnitt (45) des Fusses (42) in den Führungsbereich (53) der Bodenplatte (5) greift. Dabei kann der Führungsbereich zusammenhängend sein oder in mehrere Fragmente unterteil sein. Diese Anordnung erlaubt ein einfaches Einfügen und gegebenenfalls mittels Drehbewegung das Befestigen der Stütze (4) mit Fuss (42) an der Bodenplatte (5).

Der Führungsbereich (53) kann parallel zur Bodenplatte (5) angeordnet sein, d.h. die Distanz zwischen Führungsbereich (53) und Bodenplatte (5) bleibt im Wesentlichen über den gesamten Führungsbereich (53) konstant. Alternativ kann sich die Distanz zwischen Führungsbereich (53) und Bodenplatte (5) des Führungsbereichs (53) verändern - insbesondere verjüngen, d.h. die Distanz nimmt ab. Dabei sind die Abstände vorteilhafterweise so gewählt, dass der Fuss (42) - wird er in den Führungsbereich (53) eingeführt - sich zunächst gut drehen lässt. Gegen das Ende des Führungsbereichs (53), wo sich der Abstand verringert, klemmt sich der Fuss (42) dann im Führungsbereich (53) ein.

Weist die Bodenplatte (5) mindestens einen Führungsbereich (53) auf, umfasst der Drehverschluss (6) bevorzugt zwei einander gegenüberliegende Führungsbereiche (53) und der Fuss (42) der Stütze (4) zwei gerundete, einander gegenüberliegende Abschnitte, wobei die gerundeten Abschnitte des Fusses (42) in die Führungsbereiche (53) der Bodenplatte (5) greifen. Dabei übersteigt der Winkelumfang der Führungsbereiche (53) und der gerundeten Abschnitte (45) jeweils einen Winkel von 90° nicht. Dies erlaubt ein einfaches Einfügen des Fusses (42) der Stütze (4) in den Drehverschluss (6) der Bodenplatte (5) mit anschliessendem Befestigen der Stütze an der Bodenplatte (5) mittels einfacher Drehbewegung, bei welcher die gerundeten Abschnitte (45) in die Führungsbereiche (53) eingeschoben werden. Aufgrund der einander gegenüberliegenden Führungsbereiche (53) erhöht sich die Stabilität der Stütze an der Bodenplatte (5).

In einer bevorzugten Ausführungsform wird der Drehverschluss (6) ausgebildet durch eine Öse mit Kragen (51, 44) und eine Öffnung (43, 52), wobei die Öse (51, 44) in die Öffnung (43, 52) greift, und umfasst zwei einander gegenüberliegende, an der Bodenplatte (5) angebrachte, Führungsbereiche (53) sowie der Fuss (42) der Stütze (4) zwei gerundete, einander gegenüberliegende Abschnitte, wobei die gerundeten Abschnitte des Fusses (42) in die Führungsbereiche (53) der Bodenplatte (5) greifen und der Winkelumfang der Führungsbereiche (53) und der gerundeten Abschnitte (45) jeweils einen Winkel von 90° nicht übersteigt. Dadurch werden die Vorteile der Öse mit Kragen (51, 44), welche in die Öffnung (43, 52) greift, mit den Vorteilen der Führungsbereiche (53), in welche die Abschnitte des Fusses (42) greifen, kombiniert. Somit kommen die Vorzüge des Drehverschlusses (6), wie einfache Handhabung und problemloses, reversibles Befestigen der Stütze (4) an der Bodenplatte (5) besonders gut Geltung.

Der Fuss (42) der Stützen (4) und die Bodenplatte (5) können zudem mindestens eine weitere Öffnung (46, 55) aufweisen, um die Stütze (4) und die Bodenplatte (5) mittels Nagels oder Schraube am Untergrund - beispielsweise an einer Schalplatte aus Holz - zu befestigen. Dabei sind die Öffnungen (46, 55) typischerweise so angeordnet, dass sie übereinander zu liegen kommen, wenn - sofern vorhanden - die Stütze (4), und somit auch der Fuss (42), im Drehverschluss (6) korrekt gedreht ist und die gerundeten Abschnitte des Fusses (42) in die Führungsbereiche (53) der Bodenplatte greifen.

Die Bodenplatte (5) kann im Bereich des Drehverschlusses (6) und somit des gerundeten Führungsbereichs (53) einen Positionshalter (54) aufweisen, an welchem der untere äussere Bereich (47) der Stütze (4) anschlägt oder einrastet. Dadurch wird die Stütze (4) an der Bodenplatte (5) bei korrekter Drehung fixiert, dass die beiden Stützen (4) der Einlegerohrschelle (1) in optimaler Position zueinanderstehen, wodurch das Einfügen der Stützen (4) in die Öffnungen (23) des oder der Rohrschellenbügel (2) stark erleichtert wird.

### Das Verfahren

Gemäss dem erfindungsgemässen Verfahren zum Verlegen von Rohren (7) mit der erfindungsgemässen Einlegerohrschelle (1)
i) werden die Klammern (3) in die Endbereiche (21, 22) eines ersten Rohrschellenbügels (2) geschoben, wodurch mindestens ein Fixierelement A (24, 27) des Rohrschellenbügels (2) und mindestens ein Fixierelement B (31, 35) der Klammern (3) ineinandergreifen, und so die Klammern (3) am Rohrschellenbügel (2) gehalten werden;
ii) werden die Stützen (4) vor- oder nachher durch die Öffnungen (23) des ersten Rohrschellenbügels (2) geführt. Sind die Klammern (3) an dem Rohrschellenbügel (2) angebracht, wird dieser mittels der Klammern (3) an gewünschter Stelle an den Stützen (4) befestigt, indem die Zungen (34) der Klammern (3) durch die Öffnungen (41) gestossen werden. Wird das Rohr (7) mittels einer Mehrzahl von Einlegerohrschellen (1) am Untergrund fixiert, und ist das Rohr (7) insbesondere ein Abwasserrohr, kann dem Rohr (7) mittels unterschiedlicher Positionshöhen der Rohrschellenbügel (2) an den Stützen (4) von unterschiedlichen Einlegerohrschellen (1) ein Gefälle gegeben werden, sodass das Abwasser problemlos und nur durch Schwerkraft abfliessen kann;
iii) weisen die Klammern (3) einen Verschluss (25) auf und ist der Rohrschellenbügel (2) an korrekter Stelle an der Stütze (4) angebracht, kann gegebenenfalls mindestens eine Klammer (3) mittels Biegen und/oder Drehen des Verschlusses (25) fixiert werden. Dies verhindert ein versehentliches Hinausschieben der Zunge (34) - und somit der Klammer (3) - aus den Öffnungen (23) der Stütze (4);
iv) wird anschliessend ein oder mehrere Rohre (7) auf den Rohrschellenbügel (2) gelegt und bei Bedarf - beispielsweise mittels Kabelbinder - befestigt. Dabei umfasst der Begriff Rohr (7) erfindungsgemäss Rohre, Leitungen und Kabel, wobei Rohre (7) insbesondere Wasserrohre wie Abwasserrohre, Warm- und Kaltwasserrohre, Lüftungsrohre und/oder Kabelrohre; und Leitungen und/oder Kabel Stromleitungen, Telefonleitungen, Glasfaserleitungen und/oder TV-Leitungen umfassen;
v) können bei Bedarf die Schritte i) bis iii) mit einem zweiten Rohrschellenbügel (2) wiederholt werden, wodurch das Rohr (7) oben und unten mit je einem Rohrschellenbügel (2) gehalten wird und auch bei stärkerer Beanspruchung des Rohrs (7) die Position nicht verändert wird.

In einer bevorzugten Ausführungsform des erfindungsgemässen Verfahrens umfasst die Einlegerohrschelle (1) die Bodenplatte (5) und Stützen (4) mit Fuss (42), wobei zur Befestigung der Stützen (4) an der Bodenplatte (5) der Fuss (42) und die Bodenplatte (5) zusammen einen Drehverschluss (6) ausbilden, wobei der Drehverschluss (6) an der Bodenplatte (5) befestigt, ist es vorteilhaft, wenn der Drehverschluss (6) eine Öse mit Kragen (51, 44) sowie eine Öffnung (43, 52) und/oder einen gerundeten Führungsbereich (53) der Bodenplatte (5) umfasst. Dabei ist der Drehverschluss (6) bevorzugt
i) durch eine Öse mit Kragen (51, 44) und eine Öffnung (43, 52) ausgebildet, wobei die Öffnung (43, 52) um die Öse (51, 44) gelegt wird, wodurch die Stütze (4) mit dem Fuss (42) um die Bodenplatte (5) gedreht werden kann, oder
ii) der gerundete Abschnitt des Fusses (42) der Stütze (4) wird in den Führungsbereich (53) der Bodenplatte (5) - insbesondere mittels Drehbewegung - geführt, um die Stütze (4) auf einfache Art und Weise reversibel und von Hand an der Bodenplatte (5) zu befestigen, oder
iii) die Öffnung (43, 52) wird so um die Öse (51, 44) gelegt, dass der mindestens eine gerundete Abschnitt des Fusses (42) und der mindestens eine gerundete Führungsbereich (53) der Bodenplatte (5) im Wesentlichen einen Kreis, oder einen Teil oder mehrere Teile davon, bilden, wobei anschliessend der Fuss (42) der Stütze (4) um die Öffnung (52) respektive Öse (51) der Bodenplatte (5) gedreht wird, wodurch der gerundete Abschnitt des Fusses (42) in den Führungsbereich (53) greift und dadurch gehalten wird. Diese Ausführungsform erlaubt eine äusserst einfache und präzise Positionierung der Stütze im Drehverschluss (6) mit anschliessender reversibler Arretierung mittels einfacher Drehbewegung.

Weist die Bodenplatte (5) im Bereich des gerundeten Führungsbereichs (53) einen Positionshalter (54) auf, kann der untere äussere Bereich (47) der Stütze (4) am Positionshalter (54) anschlagen oder einrasten. Dadurch wird die Stütze (4) an der Bodenplatte (5) bei korrekter Drehung fixiert, dass die beiden Stützen (4) der Einlegerohrschelle (1) in optimaler Position zueinanderstehen. Dies erleichtert das Einfügen der Stützen (4) in die Öffnungen (23) des oder der Rohrschellenbügel (2).

### Die Verwendung

Die erfindungsgemässe Einlegerohrschelle (1) wird erfindungsgemäss insbesondere zum Fixieren von Rohren (7) verwendet, wobei der Begriff Rohr (7) erfindungsgemäss Rohre, Leitungen und Kabel umfasst. Geeignete Rohre (7) umfassen insbesondere Wasserrohre wie Abwasserrohre, Warm- und Kaltwasserrohre, Lüftungsrohre, Kabelrohre Stromleitungen, Telefonleitungen, Glasfaserleitungen und/oder TV-Leitungen.

Die Verwendung der erfindungsgemässen Einlegerohrschelle (1) erfolgt typischerweise bei Gebäuden und Industrieanlagen, beispielsweise bei Neubauten und/oder Renovationen von Gebäuden, und/oder bei verfahrenstechnischen Anlagen.

Dabei kann die Einlegerohrschelle (1) auf Böden, Wänden, Dielen, Trägern und/oder Gerüsten befestigt werden.

Es werden folgende Bezugszeichen verwendet:
1 Einlegerohrschelle
2 Rohrschellenbügel
   21 linker Endbereich des Rohrschellenbügels (2)
   21a linkes Endbereich-Ende
   22 rechter Endbereich des Rohrschellenbügels (2)
   22a rechtes Endbereich-Ende
   23 Öffnung im Endbereich (21, 22) des Rohrschellenbügels (2)
   24 Fixierelement A im Endbereich (21, 22) des Rohrschellenbügels (2)
   24a höchste Punkt der Ausbuchtung (24)
   25 bieg- und/oder drehbarer Verschluss des Rohrschellenbügels (2)
   26 zwei seitliche Führungselemente beim Endbereich-Ende (21a, 22a) des Rohrschellenbügels (2)
   27 Fixierelement A
3 seitliche Klammern (3)
   31 Fixierelement B der Klammer (3), in welche die Ausbuchtung (24) greift
   32 Haltebereichs der Klammer (3)
   33 weitere Öffnung im Haltebereichs (32) der Klammer (3)
   34 Zungen der Klammern (3)
   35 Fixierelement B
4 Stützen
   41 Vielzahl seitlicher Öffnungen der Stützen (4)
   42 rechtwinklig angeordneten Fuss der Stütze (4)
   43 Öffnung im Fuss (42) der Stütze (4)
   44 Öse mit Kragen im Fuss (42) der Stütze (4)
   45 gerundete Abschnitt des Fusses (42)
   46 weitere Öffnung
   47 unterer äusserer Bereich der Stütze (4)
5 Bodenplatte (5)
   51 Öse mit Kragen - Teil der Bodenplatte (5)
   52 Öffnung in der Bodenplatte (5)
   53 gerundeter Führungsbereich
   54 Positionshalter
   55 weitere Öffnung
6 Drehverschluss
7 Rohr

Im Folgenden werden nicht-limitierende, bevorzugte Ausführungsformen der erfindungsgemässen Einlegerohrschelle (1) mit Rohrschellenbügel (2), Klammern (3), Stützen (4), Bodenplatte (5) und Drehverschluss (6) anhand der nachfolgenden Zeichnungen beschrieben. Diese sind nicht einschränkend auszulegen und werden als Bestandteil der Beschreibung verstanden:

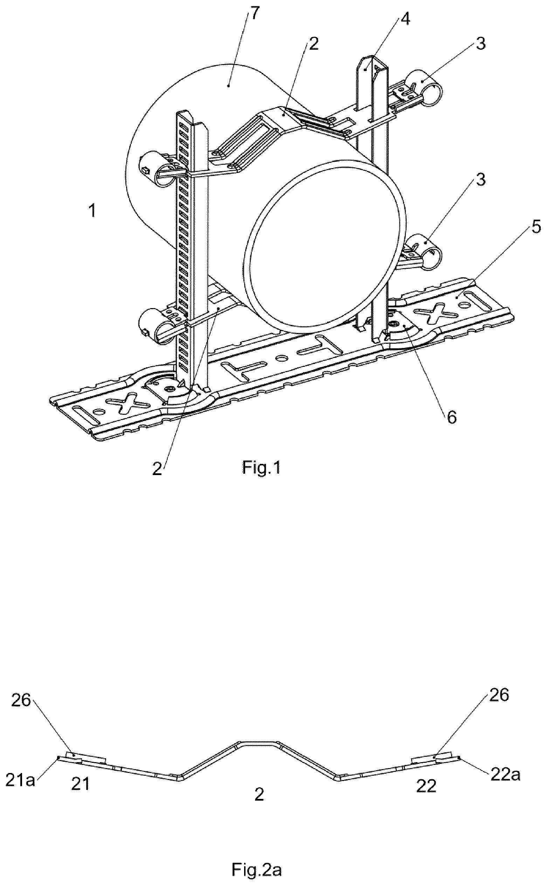

- Fig. 1: zeigt die erfindungsgemässe Einlegerohrschelle (1). An der Bodenplatte (5) wurden mittels Drehverschluss (6) zwei Stützen (4) angebracht, durch welche ein unterer Rohrschellenbügel (2) eingeführt wurde. Dieser wurde seitlich mit je einer Klammer (3) im unteren Bereich der Stützen (4) fixiert und darauf ein Rohr (7) gelegt. Anschliessend wurde ein zweiter Rohrschellenbügel (2) durch die Stützen (4) bis zum Rohr (7) geführt und dort mittels Klammern (3) an den Stützen (4) befestigt. Je nach Rohrgrösse können unterschiedliche die Dimensionen der Einlegerohrschelle (1) und deren Einzelkomponenten verwendet werden.
- Fig. 2a: zeigt ein Rohrschellenbügel (2) mit dem linken Endbereich (21) und dem rechten Endbereich (22). Diese weisen jeweils ein linkes und rechtes Endbereich-Ende (21a, 22a) auf. Der mittlere Teil des Rohrschellenbügels (2) ist erhöht, sodass er einen Teil eines Rohrs (7) optimal umschliessen kann. Die Rohrschellenbügel (2) sind typischerweise so ausgestaltet, dass sie problemlos seitlich gedreht werden können, wodurch der gleiche Rohrschellenbügel (2) als unterer Rohrschellenbügel (2), d.h. unter einem Rohr (7), und als oberer Rohrschellenbügel (2), d.h. über einem Rohr (7), angeordnet werden können.
An jedem Endbereich (21, 22) des Rohrschellenbügels (2) sind beispielhaft je zwei seitliche Führungselemente (26) angebracht, damit die Klammern (3), wenn sie über die Endbereiche (21, 22) gestossen werden, nicht seitlich abrutschen.

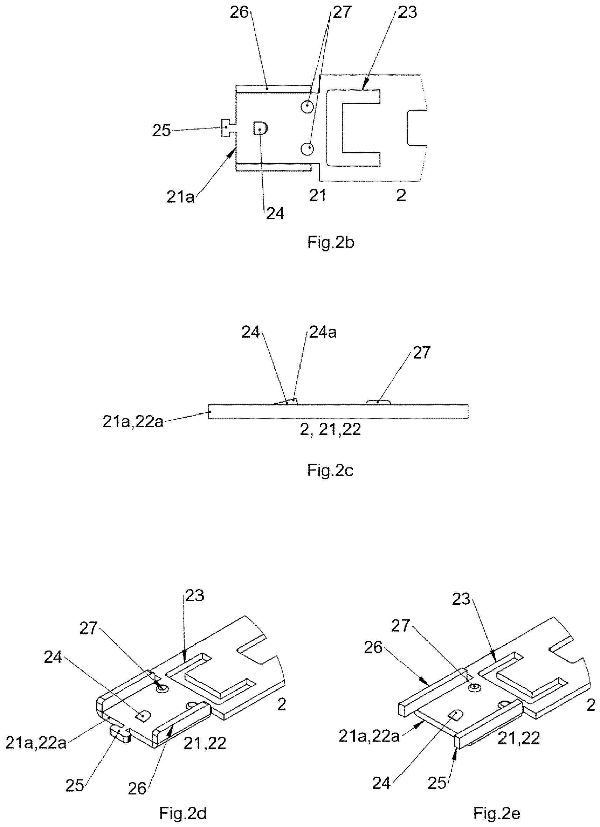

- Fig. 2b: zeigt beispielhaft den linken Endbereich (21) des Rohrschellenbügels (2) mit zwei seitlichen Führungselementen (26) und den Fixierelementen A (24, 27). Am Endbereich-Ende (21a) ist ein drehbarer Verschluss (25) angeordnet, wobei typischerweise die Drehbarkeit durch die Verjüngung des Verschlusses (25), welche am Endbereich-Ende (21a) angebracht ist, zustande kommt. Im Endbereich (21, 22) des Rohrschellenbügels (2) befindet sich die Öffnung (23), welche auf die Grösse und Form der Stützen (4) eingestellt ist, sodass die Stützen (4) problemlos, jedoch nur mit wenig Freiraum, durch die Öffnung (23) geführt werden kann. Analoges gilt für den rechten Endbereich (22), welcher typischerweise symmetrisch zum linken Endbereich (21) ausgestaltet ist.
- Fig. 2c: zeigt beispielhaft einen linken (21) resp. rechten (22) Endbereich des Rohrschellenbügels (2) mit den Fixierelementen A (24, 27), welche beispielhaft in Form einer Ausbuchtung ausgestaltet sind. Wenn nun die Klammer (3) über den Endbereich (21, 22) mit der Ausbuchtung (24) geschoben wird, gelangt die Ausbuchtung (24) in die Öffnung (31).
Das Fixierelement A (24) ist nun beispielhaft so ausgebildet, dass der höchste Punkt (24a) der Ausbuchtung in Richtung des Endbereich-Endes (21a, 22a) eine negative Steigung von etwa 20° und in Richtung der Mitte des Rohrschellenbügels (2) eine negative Steigung von etwa 75° aufweist. Dies erlaubt ein einfaches Einfügen der Klammer über die Ausbuchtung (24), verhindert jedoch ein unbeabsichtigtes Entfernen der Klammer (3) vom Endbereich (21, 22).
Das oder die Fixierelemente A (27) - beispielsweise in runder oder ovaler Form - dient zum Einrasten in die Öffnungen (35) der Klammer (3), wenn die Zungen (34) der Klammer (3) in die Öffnungen (41) der Stützen (4) eingeschoben sind.
- Fig. 2d: zeigt analog Fig. 2b beispielhaft einen linken (21) resp. rechten (22) Endbereich des Rohrschellenbügels (2) mit seitlichen Führungselementen (26), den Fixierelementen A (24, 27) und der Öffnung (23). Beim Endbereich-Ende (21a, 22a) des Rohrschellenbügels (2) ist der T-förmige Verschluss (25) angeordnet, welcher zur Fixierung der Klammer (3) am Rohrschellenbügel (2) durch die Öffnung (33) der Klammer (3) geführt und anschliessend gedreht werden kann.
- Fig. 2e: zeigt analog Fig. 2d einen linken (21) resp. rechten (22) Endbereich des Rohrschellenbügels (2) mit seitlichen Führungselementen (26). Der Verschluss (25) ist beispielhaft nicht in der Mitte des Endbereich-Endes (21a, 22a) angeordnet, sondern als Verlängerung der seitlichen Führungselemente (26). Weist nun die Klammer (3) zwei seitliche Öffnungen (33) resp. Aussparungen auf (nicht dargestellt), oder ist sie schmal genug, kann der beidseitige Verschluss (25) seitlich über den Haltebereich (32) der Klammer (3) gebogen werden, um die Klammer (3) am Rohrschellenbügel (2) zu fixieren.

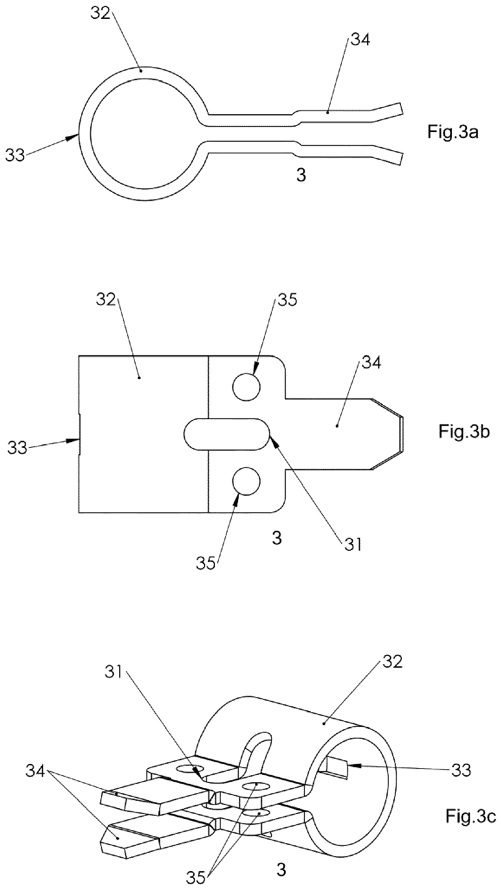

- Fig. 3a: zeigt beispielhaft die seitliche Ansicht einer Klammer (3) mit dem Haltebereich (32) und einer darin angebrachten Öffnung (33) zur Aufnahme eines Verschlusses (25). Die Klammer (3) weist zudem zwei Zungen (34) auf, welche in die Öffnungen (41) geführt werden können, um den Rohrschellenbügel (2) an den Stützen zu fixieren.
- Fig. 3b und Fig. 3c: zeigen beispielhaft die Aufsicht (Fig. 3b) und eine 3-D Darstellung (Fig. 3c) die Klammer (3) mit dem Haltebereich (32), der Öffnung (33), den Zungen (34) sowie einer länglichen Öffnung als Fixierelement B (31) zur Aufnahme des Fixierelements A (24) in Form einer Ausbuchtung. Die längliche Form des Fixierelements B (31) erlaubt das problemlose Hin- und Herbewegen der Klammer (3) in Längsrichtung des Rohrschellenbügels (2). Zudem weist die Klammer (3) zwei Fixierelemente B (35) in Form von runden Öffnungen oder Einbuchtungen aus zur Aufnahme der Fixierelemente A (27) in Form einer Ausbuchtung.

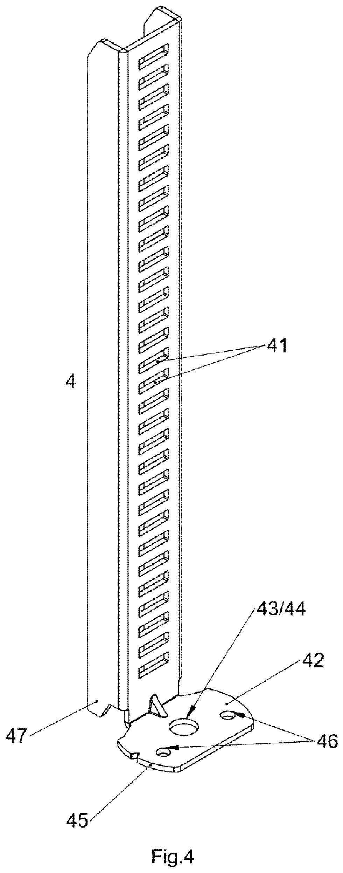

- Fig. 4: zeigt beispielhaft eine Stütze (4) mit einer Vielzahl an Öffnungen (41) und einem zum Längsteil der Stütze (4) mit den Öffnungen (41) rechtwinklig angeordneten Fuss (42). Dieser umfasst eine Öffnung (43), welche gegebenenfalls durch eine Öse mit Kragen (44) (nicht dargestellt) erweitert werden kann, zwei einander gegenüberliegende, gerundete Abschnitte (45), welche im Drehverschluss (6) durch Drehbewegung in die gerundeten Führungsbereiche (53) gedreht werden können. Zudem weist der Fuss (42) zwei weitere Öffnungen (46) auf, durch welche - wenn die Stütze (4) in die korrekte Position und über der weiteren Öffnung (55) der Bodenplatte (5) gedreht ist - die Stütze (4) mit der Bodenplatte (5) mittels Nägel oder Schrauben am Untergrund fixiert werden kann.
Zudem ist am unteren, vertikalen Bereich der Stütze (4) der untere äussere Bereich (47) der Stütze (4) angeordnet, welcher - sofern vorhanden - am Positionshalter (54) der Bodenplatte (5) anschlägt oder einrastet.

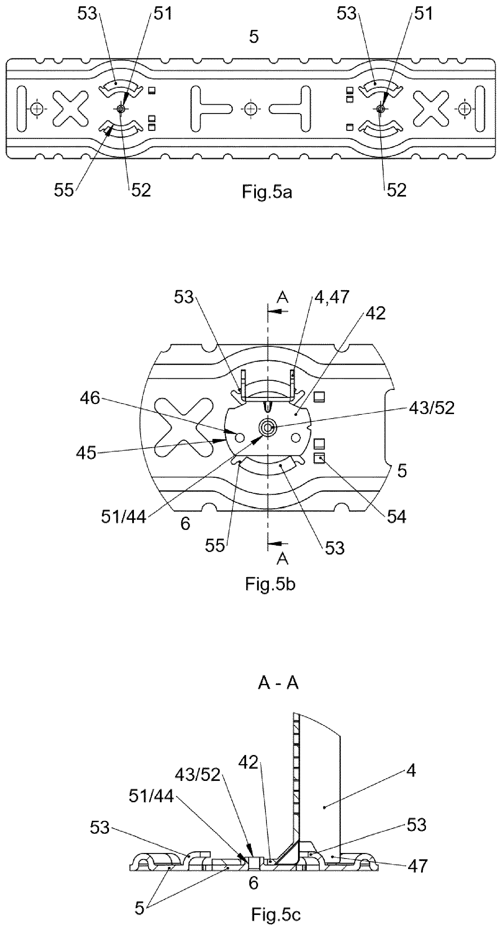

- Fig. 5a: zeigt eine beispielhafte Ausführungsform der Bodenplatte (5) mit den Öffnungen (52), welche mit Ösen mit Kragen (51) ausgebildet sind, sowie je zwei gegenüberliegende Führungsbereiche (53) mit weiteren Öffnungen (55), welche sich nebenan befinden. Zusammen bilden sie den Teil des Drehverschlusses (6), welcher an der Bodenplatte (5) angeordnet ist.
- Fig. 5b: zeigt den Drehverschluss (6) umfassend den oben unter Fig. 5a beschriebenen Teil der Bodenplatte (5), und den Fuss (42) der Stütze (4). Dabei ist die Öffnung (43) des Fusses (42) über die Öse mit Kragen (51) der Bodenplatte gelegt, was ein optimales Drehen ohne Positionsveränderung ermöglicht. Durch Drehen der Stütze (4) mit Fuss (42) werden die gerundeten Abschnitte (45) des Fusses (42) in die gerundeten Führungsbereiche (53) der Bodenplatte (5) eingefügt, sodass die Stützen (4) an der Bodenplatte (5) reversibel befestigt ist. Wird nun die Stütze (4) mit Fuss (42) in Richtung Uhrzeigersinn um 90° gedreht, rastet der untere äussere Bereich (47) der Stütze (4) in dem - beispielhaft dargestellten - Positionshalter (54) ein, wodurch sich die Stütze (4) ohne etwas grösseren und bewusst aufgewendeten Kraftaufwand nicht mehr drehen lässt.
Wenn die Stütze (4) korrekt positioniert ist, kann sie zusammen mit der Bodenplatte (5) am Boden fixiert werden, indem beispielsweise Nägel und/oder Schrauben durch die weiteren Öffnungen (46, 55) am Untergrund angebracht werden.
- Fig. 5c: zeigt den in Fig. 5b angedeuteten Schnitt A-A durch den Drehverschluss (6) umfassend die Stütze (4) mit Fuss (42) und Öffnung (43), wobei die Öffnung (43) über die Öse mit Kragen (51) der Bodenplatte (5) gelegt ist. Es ist auch möglich, dass der Fuss (42) eine Öse mit Kragen (44) und die Bodenplatte (5) lediglich eine Öffnung (52) ohne Öse mit Kragen aufweist. Zudem sind gegenüberliegende gerundete Führungsbereiche (53) angeordnet, in welche die gerundeten Abschnitte (45) des Fusses (42) nach einerbeispielsweise 90°-Drehung - greifen.

## Patentansprüche

1. Einlegerohrschelle (1) umfassend mindestens einen Rohrschellenbügel (2) mit seitlichen Klammern (3) und Stützen (4) mit einer Vielzahl seitlicher Öffnungen (41), wobei der Rohrschellenbügel (2) einen linken und einen rechten Endbereich (21, 22) mit je einer Öffnung (23) aufweist, wobei die Stützen (4) in die Öffnungen (23) eingeführt werden können und die Klammern (3) so über die Endbereiche (21, 22) geschoben werden können, dass die Klammern (3) in mindestens eine Öffnung (41) der Stütze (4) greifen um den Rohrschellenbügel (2) an der Stütze (4) zu befestigen, **dadurch gekennzeichnet, dass**
- die Endbereiche (21, 22) mindestens ein Fixierelement A (24, 27) und die Klammern (3) mindestens eine Zunge (34) und mindestens ein Fixierelement B (31, 35) aufweisen, wobei das Fixierelement A (24, 27) und das Fixierelement B (31, 35) ineinandergreifen, wodurch die Klammer (3) am Endbereich (21, 22) des Rohrschellenbügels (2), und somit an der gegenüberliegenden Seite des relativ zum zwischen den Öffnungen (23) befindlichen Mittelteils des Rohrschellenbügels (2), fixiert wird,
- die Klammer (3), wenn sie in mindestens eine Öffnung (41) der Stütze (4) greifen um den Rohrschellenbügel (2) an der Stütze (4) zu befestigen, die Stütze (4) nicht umfasst, und
- die Zunge (34) der Klammer (3), wenn die Klammer an den Endbereichen (21, 22) des Rohrschellenbügels (2) angebracht ist, parallel zu den Endbereichen (21, 22) des Rohrschellenbügels (2) angeordnet ist.

2. Einlegerohrschelle (1) nach Anspruch 1, **dadurch gekennzeichnet, dass** das Fixierelement A (24) eine Ausbuchtung in den Endbereichen (21, 22) und das Fixierelement B (31) eine Öffnung oder Einbuchtung darstellt, wobei das Fixierelement A (24) so ausgebildet ist, dass der höchste Punkt (24a) der Ausbuchtung in Richtung i)
des Endbereich-Endes (21a, 22a) eine negative Steigung von 5° bis 50°, insbesondere von 10° bis 40°, und/oder
ii) der Mitte des Rohrschellenbügels (2) eine negative Steigung von 55° bis 90°, insbesondere von 70° bis 90°, aufweist.

3. Einlegerohrschelle (1) nach Anspruch 1 oder 2, **dadurch gekennzeichnet, dass** das Fixierelement A (24) eine Ausbuchtung und das Fixierelement B (31) eine längliche Öffnung darstellt, wodurch, wenn das Fixierelement A (24) und das Fixierelement B (31) ineinander greifen, die Klammer (3) in Längsrichtung des Rohrschellenbügels (2) frei hin und zurück geschoben werden kann, solange die Fixierelemente A, B (24, 31) ineinander greifen.

4. Einlegerohrschelle (1) nach mindestens einem der Ansprüche 1 bis 3, **dadurch gekennzeichnet, dass** das Fixierelement A (27) in Form einer Ausbuchtung, Öffnung oder Einbuchtung ausgebildet ist, wobei bevorzugt die Klammer (3) mindestens ein Fixierelement B (35) in Form einer Öffnung, Einbuchtung oder Ausbuchtung umfasst, wobei das Fixierelement A (27) und das Fixierelement B (35) ineinandergreifen.

5. Einlegerohrschelle (1) nach mindestens einem der Ansprüche 1 bis 4, **dadurch gekennzeichnet, dass** mindestens ein Endbereich-Ende (21a, 22a) des Rohrschellenbügels (2) einen bieg- und/oder drehbaren Verschluss (25) und mindestens eine Klammer (3) in der Mitte des Haltebereichs (32) der Klammer (3) eine weitere Öffnung (33) aufweist, durch welche der Verschluss (25) beim Befestigen der Klammer (3) an der Stütze (4) hindurch führt.

6. Einlegerohrschelle (1) nach mindestens einem der Ansprüche 1 bis 5, **dadurch gekennzeichnet, dass** mindestens ein Endbereich-Ende (21a, 22a) des Rohrschellenbügels (2) zwei seitliche Führungselemente (26) aufweist, welche mindestens einen Teil der Klammer (3) seitlich führen.

7. Einlegerohrschelle (1) nach mindestens einem der Ansprüche 1 bis 6, **dadurch gekennzeichnet, dass** die Einlegerohrschelle (1) eine Bodenplatte (5) umfasst, wobei die Stützen (4) im unteren Endbereich der Stützen (4) einen dazu im Wesentlichen rechtwinklig angeordneten Fuss (42) aufweisen, und die Bodenplatte (5) und der Fuss (42) der Stützen (4) zur Befestigung der Stützen (4) an der Bodenplatte (5) zusammen einen Drehverschluss (6) ausbilden.

8. Einlegerohrschelle (1) nach Anspruch 7, **dadurch gekennzeichnet, dass** Drehverschluss (6) mindestens einen gerundeten Führungsbereich (53) umfasst, wobei der Führungsbereich (53) Teil der Bodenplatte (5) ist und der Winkelumfang des oder der Führungsbereiche (53) einen Winkel von 180° nicht übersteigt, sowie der Fuss (42) der Stütze (4) mindestens einen gerundeten Abschnitt (45) umfasst, wobei der gerundete Abschnitt (45) des Fusses (42) in den Führungsbereich (53) der Bodenplatte (5) greift.

9. Einlegerohrschelle (1) nach mindestens einem der Ansprüche 7 oder 8, **dadurch gekennzeichnet, dass** der Drehverschluss (6) durch eine Öse mit Kragen (51, 44) und eine Öffnung (43, 52) ausgebildet ist und die Öse (51, 44) in die Öffnung (43, 52) greift, wobei
i) die Öse (51) Teil der Bodenplatte (5) ist, und die Öffnung (43) eine Öffnung im Fuss (42) der Stütze (4) darstellt, oder
ii) die Öffnung (52) eine Öffnung in der Bodenplatte (5) darstellt, und die Öse (44) eine Öse im Fuss (42) der Stütze (4) darstellt.

10. Einlegerohrschelle (1) nach mindestens einem der Ansprüche 7 bis 9, **dadurch gekennzeichnet, dass** der Rohrschellenbügel (2), die Klammern (3), die Stützen (4), und gegebenenfalls die Bodenplatte (5) und/oder der Drehverschluss (6), der Einlegerohrschelle (1) auf verzinktem Blech, Stahl, Edelstahl, Eisen, Messing, Kupfer, Aluminium und/oder Hartkunststoff basieren.

11. Einlegerohrschelle (1) nach mindestens einem der Ansprüche 7 bis 10, **dadurch gekennzeichnet, dass** der Fuss (42) der Stützen (4) und die Bodenplatte (5) mindestens eine weitere Öffnung (46, 55) aufweist, um die Stütze (4) und die Bodenplatte (5) mittels Nagel oder Schraube am Untergrund zu befestigen.

12. Einlegerohrschelle (1) nach mindestens einem der Ansprüche 1 bis 11, **dadurch gekennzeichnet, dass** die Bodenplatte (5) im Bereich des gerundeten Führungsbereichs (53) einen Positionshalter (54) aufweist, an welchem der untere äussere Bereich (47) der Stütze (4) anschlägt oder einrastet.

13. Verfahren zum Verlegen von Rohren (7) mit der Einlegerohrschelle (1) nach mindestens einem der Ansprüche 1 bis 12, **dadurch gekennzeichnet, dass**
i) die Klammern (3) in die Endbereiche (21, 22) eines ersten Rohrschellenbügels (2) geschoben werden, wodurch mindestens ein Fixierelement A (24, 27) des Rohrschellenbügels (2) und mindestens ein Fixierelement B (31, 35) der Klammern (3) ineinandergreifen, und so die Klammern (3) am Rohrschellenbügel (2) gehalten werden,
ii) die Stützen (4) durch die Öffnungen (23) des ersten Rohrschellenbügels (2) geführt werden und der Rohrschellenbügel (2) mittels den Klammern (3) an gewünschter Stelle an den Stützen (4) befestigt wird, indem die Zungen (34) der Klammern (3) durch die Öffnungen (41) gestossen werden,
iii) gegebenenfalls mittels Biegen und/oder Drehen des Verschlusses (25) mindestens eine Klammer (3) fixiert wird,
iv) ein Rohr (7) auf den Rohrschellenbügel (2) gelegt wird, und
v) gegebenenfalls die Schritte i) bis iii) mit einem zweiten Rohrschellenbügel (2) wiederholt werden, wodurch das Rohr (7) oben und unten mit je einem Rohrschellenbügel (2) gehalten wird.

14. Verfahren nach Ansprüche 13, **dadurch gekennzeichnet, dass** die Bodenplatte (5) und der Fuss (42) der Stützen (4) zur Befestigung der Stützen (4) an der Bodenplatte (5) zusammen einen Drehverschluss (6) ausbilden, wobei der Drehverschluss (6) eine Öse mit Kragen (51, 44) sowie eine Öffnung (43, 52) und/oder einen gerundeten Führungsbereich (53) der Bodenplatte (5) umfasst, wobei der Drehverschluss (6) bevorzugt
i) durch eine Öse mit Kragen (51, 44) und eine Öffnung (43, 52) ausgebildet ist, wobei die Öffnung (43, 52) um die Öse (51, 44) gelegt wird, wodurch die Stütze (4) mit dem Fuss (42) um die Bodenplatte (5) gedreht werden kann, oder
ii) der gerundete Abschnitt des Fusses (42) der Stütze (4) in den Führungsbereich (53) der Bodenplatte (5) geführt wird, insbesondere mittels Drehbewegung, oder
iii) die Öffnung (43, 52) so um die Öse (51, 44) gelegt wird, dass der mindestens eine gerundete Abschnitt des Fusses (42) und der mindestens eine gerundete Führungsbereich (53) der Bodenplatte (5) im Wesentlichen einen Kreis, oder einen Teil oder mehrere Teile davon, bilden, wobei anschliessend der Fuss (42) der Stütze (4) um die Öffnung (52) respektive Öse (51) der Bodenplatte (5) gedreht wird, wodurch der gerundete Abschnitt des Fusses (42) in den Führungsbereich (53) greift und dadurch gehalten wird.

15. Verwendung der Einlegerohrschelle (1) nach mindestens einem der Ansprüche 1 bis 12 zum Fixieren von Rohren (7) wie Wasserrohre, Lüftungsrohre, Kabelrohre sowie Kabel und/oder Leitungen wie Stromleitungen, Telefonleitungen und/oder TV-Leitungen.
